# EUROPEAN PATENT SPECIFICATION

(11) **EP 4 300 320 B1**
(45) Date of publication and mention of the grant of the patent: **30.07.2025**
(21) Application number: 23174293.3
(22) Date of filing: 19.05.2023
(51) Int. Cl.: G06F 13/42

(54) **METHOD FOR SERIAL PERIPHERAL INTERFACE (SPI) OPERATING-MODE SYNCHRONIZATION BETWEEN AN SPI HOST AND AN SPI DEVICE, AND SPI BUS SYNCHRONIZATION APPARATUS**
VERFAHREN ZUR BETRIEBSMODUSSYNCHRONISATION EINER SERIELLEN PERIPHERIESCHNITTSTELLE (SPI) ZWISCHEN EINEM SPI-HOST UND EINER SPI-VORRICHTUNG UND SPI-BUSSYNCHRONISATIONSVORRICHTUNG
PROCÉDÉ DE SYNCHRONISATION EN MODE DE FONCTIONNEMENT D'INTERFACE PÉRIPHÉRIQUE SÉRIE (SPI) ENTRE UN HÔTE SPI ET UN DISPOSITIF SPI, ET APPAREIL DE SYNCHRONISATION DE BUS SPI

(30) Priority: 21.06.2022 US 202217844764
(43) Date of publication of application: 03.01.2024
(73) Proprietor: Winbond Electronics Corp., Taichung City, Taiwan. (TW)
(72) Inventor: ADMON, Itay, Taichung City (TW)
(74) Representative: Becker, Eberhard

(56) References cited:
- US-B2- 11 256 652
- US-B2- 11 308 023

## Description

### FIELD OF THE INVENTION

The present invention relates to Serial-Peripheral Interface (SPI) bus, and particularly to methods and systems for the detection and recovery of lack of synchronization in SPI communication.

### BACKGROUND OF THE INVENTION

Serial Peripheral Interface (SPI) is defined for duplex communication between the SPI host and the SPI device. Currently, SPI has been widely used for communication between the processor and the flash memory device, wherein the processor (acting as the SPI master) sends instructions to the flash memory (acting as the SPI device), and the SPI device returns data for some opcodes.

SPI was originally defined as a single bit (1-bit) SPI, which uses a wire to send all command phases (command, address and data), this mode is referred to as 1-1-1. In order to improve performance, the SPI is then extended to 4-bit and 8-bit SPI, which uses 1-bit sending command and uses 4-bit or 8-bit sending address and data (referred to as 1-4-4 and 1-8-8 mode). Afterwards, a new bus mode was added, including a 4-bit peripheral interface (Quad Peripheral Interface; QPI) and 8 bits peripheral interface (Octal Peripheral Interface; OPI). In QPI, further using 4-bit to send all command phases (referred to as 4-4-4 mode), and in OPI, further using 8 bits to send all command phases (referred to as 8-8-8 mode). In addition, sometimes it can be used together with Execute-In-Place (XIP) operating mode, in which the SPI host does not send the operating code (opcode), and the SPI device assumes that the operating code does not change according to the previous command. Generally, an SPI host or SPI device that supports QPI or OPI also supports the at least one SPI mode (such as one of 1-1-1, 1-4-4 or 1-8-8 mode), and usually the SPI mode will be disposed as default SPI operating mode.

In all cases, the SPI host and the SPI device need to use the same operating mode for operation. When the SPI host and SPI device are in different operating modes due to some error (for example, if the host is reset), the SPI device may execute useless commands, and the SPI host may read data from the SPI device receiving error. When the SPI host changes the operating mode but the SPI device does not change the operating mode (or vice versa), it is considered as a lack of synchronization event.

US 11308023 B2 relates to a Serial Peripheral Interface (SPI) operating-mode synchronization between an SPI host and an SPI device that communicate over an SPI bus. In the SPI device, one or more values on the SPI bus are predefined as indicative of lack of synchronization of an SPI operating mode between the SPI host and the SPI device and in response to receiving any of the predefined values in the SPI device, initiating re-synchronization of the SPI operating mode. One or more wires of the SPI bus are connected to pull-up or pull-down devices that force the one or more wires to a defined logic state, and the one or more values indicative of the lack of synchronization comprise the one or more values in which the one or more wires are at the defined logic state.

### SUMMARY OF THE INVENTION

The invention is set out in the appended set of claims. The following disclosure serves a better understanding of the present invention.

### BRIEF DESCRIPTION OF THE DRAWINGS

Fig. 1 is a block diagram that illustrates an SPI communication system with Lost-Sync detection and recovery, in accordance with an embodiment of the present invention;
Fig. 2 is a waveform diagram that illustrates a Lost-Sync event detection and recovery, in accordance with an embodiment of the present invention;
Fig. 3 is a block diagram that illustrates an SPI device, in accordance with an embodiment of the present invention;
Fig. 4 is a waveform diagram that illustrates sending a mode-reset sequence by an SPI host, in accordance with an embodiment of the present invention;
Fig. 5 is a flowchart that illustrates a method for detecting Lost-Sync event by examining the input data, in accordance with an embodiment of the present invention; and
Fig. 6 is a state-diagram that illustrates the states of an SPI device, in accordance with an embodiment of the present invention.

### DETAILED DESCRIPTION OF EMBODIMENTS

SPI communication between an SPI host and an SPI device may be done in a plurality of protocols and operating modes, which vary in the width of the data bus (in the various phases of the instruction), the length of the address and an Execute-In-Place (XIP) mode.

SPI communication mentioned in the present application may support a bus-width operating mode, an address-width operating mode and an Execute-In-Place (XIP) operating mode. The detail is descripted as the followings.

The bus-width operating mode may include:
(i) SPI mode, using one wire to send the instruction phase of the instruction, and use one wire, four wires or eight wires to send the address and data phases of the instruction (referred to as 1-1-1 mode, 1-4-4 mode and 1-8-8 mode, respectively),
(ii) Quad Peripheral Interface (QPI) mode, using four wires in all phases of the instruction (referred to as 4-4-4 mode), and
(iii) Octal Peripheral Interface (OPI) mode, using one of eight wires in all phases of the instruction (referred to as 8-8-8 mode).

The address-width operating mode should be one of (i) 24-bit address, or (ii) 32-bit address.

The XIP operating mode should be either On or Off.

In an embodiment of the present application, a default SPI operating mode may be defined as SPI mode (one of 1-1-1 mode, 1-4-4 mode and 1-8-8 mode), 24-bit address, and XIP off. Both the SPI host and the SPI device typically start at the default SPI operating mode after resetting.

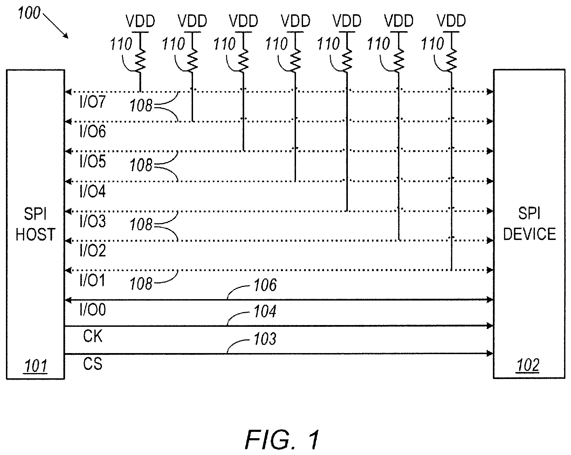

Fig. 1 is a block diagram that illustrates an SPI communication system 100 with Lost-Sync detection and recovery, in accordance with an embodiment of the present invention. An SPI Host 101 (e.g., a processor) communicates over an SPI link with an SPI Device 102, the SPI link comprising a Chip-Select (CS) wire 103, a Clock (CK) wire 104, an Input-Output (I/O) 0 wire 106, and I/O1 through I/O7 wires 108.

The communication comprises executing SPI instructions, which may include sending an opcode, sending an address, sending and/or receiving data.

According to the embodiment illustrated in Fig. 1, I/O0 wire 106 is always used, wherein I/O1 through I/O7 wires 108 (dashed lines) may be used in some or all phases of the instruction or may never be used.

To enable detection of Lost-Sync events, I/O wires 108 are coupled to Vdd (Supply-high voltage) through resistors 110. The resistors are designed so that, when the SPI device (or the SPI host) drives the corresponding wires low, the SPI host or device will prevail, and the wires will be set low; hence, the resistors are "weak-pull-up" devices.

If the SPI host is in SPI mode (one of 1-1-1 mode, 1-4-4 mode or 1-8-8 mode), and the SPI device does not drive the I/O bus, I/O1 through I/O7 wires 108 will be driven high during the opcode phase by the pull-up devices. If, according to the protocol, the SPI device does not expect to receive high levels in I/O1 through I/O7, the SPI device may interpret the received high level as detecting a Lost-Sync event when receiving high levels in I/O1 through I/O7, and will take recovery measures (e.g., switch to the default SPI operating mode).

Thus, when the SPI host is unilaterally changed to the SPI mode and the SPI device is still in non-SPI mode (such as QPI or OPI mode) due to some reasons, the pull-up resistors coupled to I/O1 through I/O7 may drive I/O1 through I/O7 to high level in the opcode phase so that the SPI device may detect a Lost-Sync event and recover to the default SPI operating mode.

In an embodiment, if the SPI device 102 supports 4-bit rather than 8-bit bus, the SPI communication device 100 may merely configure three pull-up devices. In another embodiment, the pull-up devices may be configured in the SPI host 101; in other embodiments, the pull-up devices may be in the SPI device 102.

In alternative embodiments, pull-down devices (e.g., weak pull-down resistors) can be used instead of pull-up devices. Generally put, the pull-up or pull-down devices force the relevant SPI wires to a defined logic state ("1" in the case of pull-up, "0" in the case of pull-down). Thus, when using pull-down devices, the values indicative of lack of sync should also be changed to "0". In yet another alternative embodiment, pull-down devices are used in combination with negative logic, wherein a low voltage level represents logic-high, and a high voltage level represents logic-low.

In an embodiment, multiple SPI devices may be coupled to a single SPI host, and in another embodiment multiple SPI hosts may be connected to one or more SPI devices.

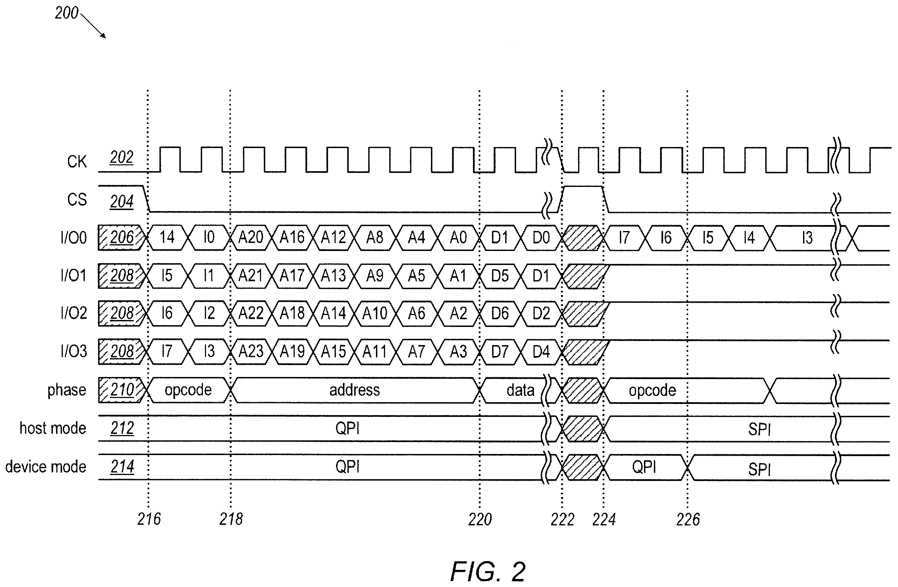

Fig. 2 is a waveform diagram 200 that illustrates a Lost-Sync event detection and recovery, in accordance with an embodiment of the present invention. Please refer to FIG. 2. At a time-point 216, the SPI host sets CS as low level, to indicate the start of a new instruction. Both the SPI host and the SPI device are in the QPI mode (e.g., responsively to a past set-mode instruction). The SPI host sends the opcode starting at time-point 216; then, at a timepoint 218, starts sending the address and, at a timepoint 220, sends the data.

The instruction ends at a time-point 222 wherein the SPI Host sets CS as high level and stop the clock. Then, at a time-point 224, the SPI host starts an SPI mode instruction, and the SPI device misses the mode transition and remains in QPI mode.

When in SPI mode, the SPI host does not drive I/O wires 1 through 3 in the opcode phase, but, since the wires are coupled to pull-up devices 110 (Fig. 1), the I/O wires 1 through 3 will assume as a high level. The SPI device in the opcode phase will receive "1" in the I/O wires 1 through 3; assuming the highest order two bits of the current opcode are 0, the SPI device will get 0 from I/O0 (i.e., I0=0 and I4=0), and the opcode gotten will be 11101110 (0xEE). The SPI device will recognize this opcode as a lost-sync indication and, at a time-point 226, switch to the default mode, recovering from the Lost-Sync event.

In some embodiments the bus-width operating mode between time-points 216 and 218 may be Octal, and I/O wires 4 through 7 may be added. In an embodiment, the SPI device may detect a Lost-Sync event instantaneously and revert to the default mode in the same clock cycle (and, hence, time-points 224 and 226 merge). At the time, the time difference between time-points 224 and 226 may be any suitable number of clock cycles.

In embodiments, when the SPI device has detected a Lost-Sync event and reverts to the default mode, but the SPI host may have sent a first bit (or several first bits) of a SPI mode instruction, they will not be in sync time-wise (e.g., the second bit that the SPI host sends may be interpreted by the SPI device as a first bit of an instruction) although the SPI host and the SPI device will be similarly in the SPI mode.

Therefore, to assure time-sync in case of lost-sync, the SPI device may further comprise parallel decoding circuitry.

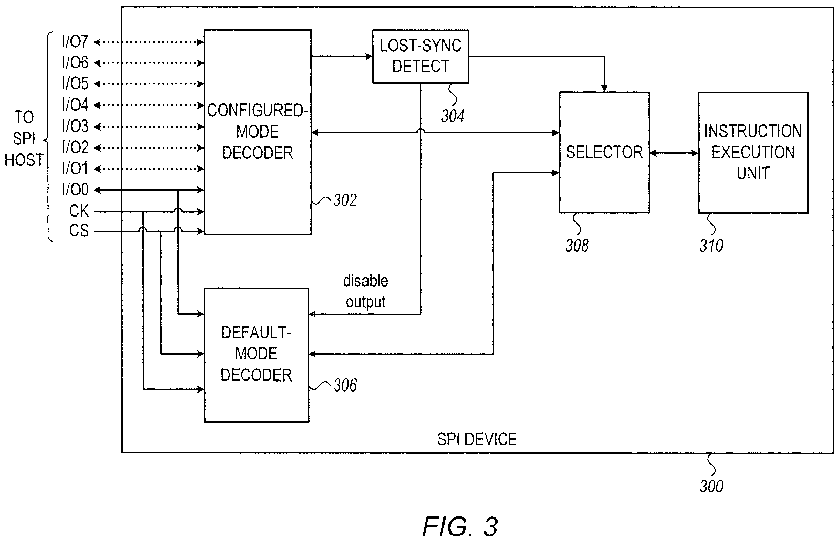

Fig. 3 is a block diagram that illustrates an SPI device 300, in accordance with an embodiment of the present invention. The SPI device 300 comprises a configurable mode decoder 302, Lost-Sync detection circuit 304, default-mode decoder 306, selector 308, and instruction execution unit 310.

In an embodiment, the configurable mode decoder 302 is coupled to I/O1 through I/O7 and configured to be able to decode SPI instructions in a default SPI operating mode (one of 1-1-1, 1-4-4 or 1-8-8) and in either QPI mode (4-4-4) or OPI mode (8-8-8). In some embodiments, the configurable mode decoder 302 may decode the SPI instructions in both QPI mode and OPI mode.

The Lost-Sync detection circuit 304 is coupled to the configurable mode decoder 302 and is configured to detect logic-high level on I/O wires when a logic-low level is expected, and to interpret the detection result as a Lost-Sync event.

The default-mode decoder 306 is coupled to I/O0 and configured to decode instructions that the SPI host sends. In addition, the default-mode decoder 306 is coupled to the Lost-Sync detection circuit 304 and is configured to stop outputting the decode result when the Lost-Sync detection circuit 304 fails to detect a loss of synchronization event. Assuming that the SPI host and the SPI device are in a non-SPI mode (e.g., OPI mode or QPI mode), when the SPI host unilaterally switches to the SPI mode (e.g., because of Reset), the default-mode detector 306 may still decode the instruction correctly, even though the SPI device is still in a non-SPI mode (e.g., OPI mode or QPI mode).

The selector 308 is coupled to the configurable mode decoder 302, the Lost-Sync detection circuit 304, the default-mode decoder 306, and the instruction execution unit 310. The selector 308 is configured to connect either the configured-mode decoder 302 or the default mode decoder 306, to an instruction execution unit 310, responsively to whether the Lost-Sync detection circuit 304 detects a Lost-Sync event.

In the example of FIG. 3, the configurable mode decoder 302 and the default-mode decoder 306 are described in different blocks, but the present invention is not limited thereto.

In an embodiment, the default-mode decoder 306 is a part of the configured decoder 302.

In particular, when the SPI host drives an instruction Opcode while in SPI mode, the SPI host drives I/O0 wire only, and does not drive the additional I/O wires that are used in higher bus width modes.

Therefore, pull-up devices 110 (Fig. 1) will set the value of I/O1 through I/O3 or I/O1 through I/O7 to logic '1' when the SPI Master drives the instruction Opcode on I/O0.

At the time, if the SPI device is still in QPI mode or OPI mode, and decodes the incoming instruction Opcode accordingly, the SPI device will assume all 4 (QPI) or 8 (OPI) wires carry valid Opcode bits. However, Since I/O1-I/O3 or I/O1-I/O7 at the time are set to '1' by the pull-up devices, and only I/O0 is driven by the SPI host, the opcodes that the SPI device may receive and decode merely include: 0xFF, 0xFE, 0xEF, 0xEE (the former two opcodes may be received in QPI and OPI mode, the latter two opcodes may be received only in QPI mode). Therefore, in the embodiment, when the opcodes receive 0xFF, 0xFE, 0xEF and 0xEE, the SPI device may interpret Opcodes as Lost-Sync events.

Performing Lost-Sync recovery that the SPI device responsive to detecting a Lost-Sync event, may set the SPI device to the default mode, to properly decode further instructions. In addition, the SPI device decodes by optionally using the parallel default mode decoding to reconstruct and execute the previous command.

When the same instruction Opcode is executed repeatedly, the SPI communication may open a XIP operating mode to save time. When the XIP operating mode is turned on, the SPI host may skip sending the instruction opcode phase and only sending the address and data. When the XIP mode is turned on, the first byte of the instruction is the MS-Byte of the address. In an embodiment, the SPI host, for example, may enter the XIP operation mode by disposing I/O0 to high logic in the first loop after sending the address related to the instruction.

Since most SPI devices use only a small portion of the address space, the MS-bits of the address are expected to be 0. For example, when 32b addressing mode is used by a 256Mbit SPI device (32MByte), the largest possible address is 0x01FFFFFF, with the seven MS-bits at logic 0.

In an embodiment, pull-up devices set I/O1 through I/O3 (or I/O1 through I/O7) to logic 1 when the SPI host is in the SPI mode. Hence, if the SPI device is still in XIP mode turned on, it expects to receive an address in OPI mode or QPI mode, the most significant address byte will be 0xFF, 0xFE, 0xEF or 0xEE. In this embodiment, any address that starts with 0xFF, 0xFE, 0xEF or 0xEE may be interpreted as a Lost-Sync event. In an embodiment, it may define that the MS-bit of the received address range must be 0, otherwise it will be interpreted as the Lost-Sync event; this limits the memory size to 8Mbyte in 24-bit address mode and to 2Gbyte in 32-bit address mode.

In an embodiment, the SPI device, responsively to detecting a Lost-Sync event while in XIP mode turned on, may recovery the operating mode to the default mode. In addition, the previous command can be selectively decoded in parallel so as not to lose any instruction.

In some applications, it may not be possible to exclude address ranges that start with an FF, FE, EF or EE byte. In this embodiment, it is able to send a unique Mode-Reset sequence by the SPI host; the SPI device, when receiving the Mode-Reset sequence, unconditionally switches to the default mode without the pull-up devices, and further recovers the synchronization with the SPI host. In an embodiment, the Mode-Reset sequence is defined as a sequence of all-1 in all available I/O wires, for, for example, sixteen consecutive clock cycles. The SPI device decodes this instruction as opcode 0xFF followed by all-1 address and data, regardless of the current interface operating mode.

Furthermore, when XIP Mode is on, the SPI device should be defined the specific address as illegal and interpret the specific address as Mode-Reset sequence. For example, if the addressing mode is 24-bit, the SPI device may define 0xFFFFFF as the specific address; if the addressing mode is 32-bit, the SPI may define 0xFFFFFFFF as the specific address.

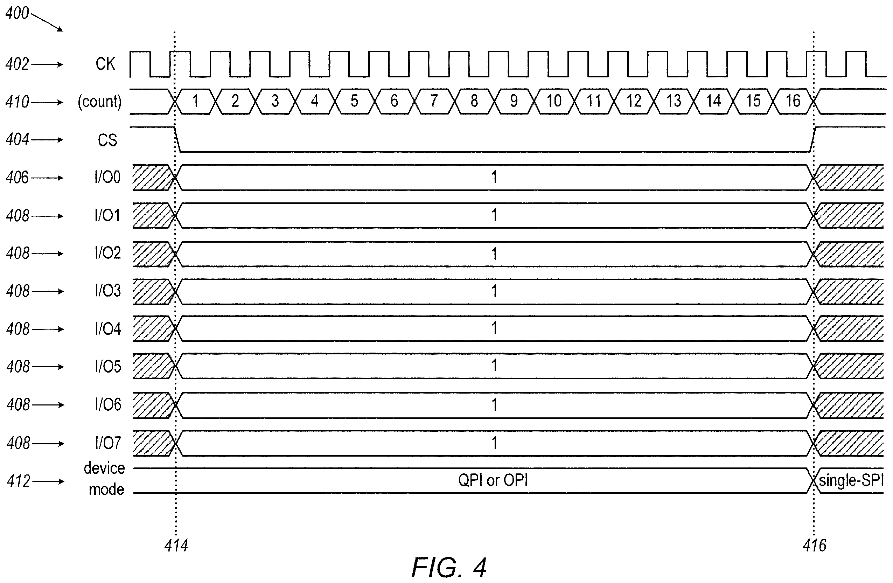

Fig. 4 is a waveform diagram 400 that illustrates sending a mode-reset sequence by an SPI host, in accordance with an embodiment of the present invention.

Please refer to FIG. 4. The SPI host, at a time-point 414, sets the CS wire as logic low level, to indicate an instruction. Then, during the next 16 clock cycles, the SPI host sets all I/O wires that are connected to the SPI device as logic-1, to indicate a mode-reset sequence. At a time-point 416, the mode-reset ends, and the SPI host set the CS wire as logic high level.

At time-point 414 the SPI device may be in any operating mode, including, for example, QPI mode or OPI mode. At a time-point 416, after receiving logic-1 on all I/O wires for sixteen consecutive clock cycles, the SPI device detects the Mode-reset sequence and reverts to the default mode.

The polarities of the signals described hereinabove is an example that is compatible with the present SPI bus definition and applications. The present invention, however, are not limited thereto. For example, in embodiment, it is valid when the CS wire is logic high level. In another embodiment, when the I/O wire is disposed as low voltage, it means that logic-1 carries negative logic (that is - a logic-1 is signaled by a low voltage, whereas a logic-0 is indicated by a high voltage), and pull-down rather than pull-up devices are coupled to the I/O wires.

In addition, embodiments of the present invention support SPI variants wherein the bus width (number of I/O wires) is different than 1,2,4 or 8. For example, in an embodiment, the disclosed techniques, *mutatis mutandis,* may be used in an SPI variant having 16 I/O wires.

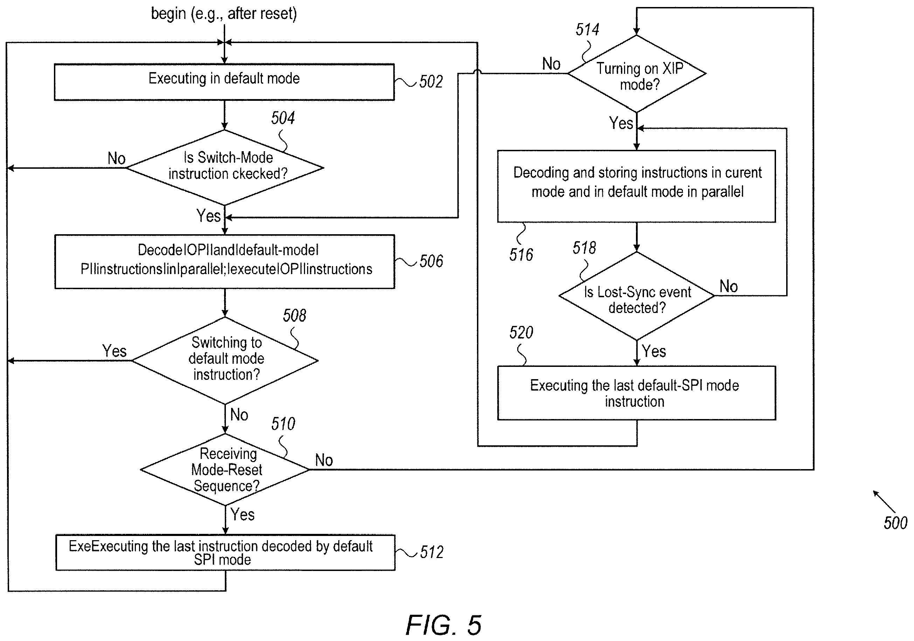

Fig. 5 is a flowchart 500 that illustrates detecting Lost-Sync events by examining the input data, in accordance with an embodiment of the present invention. Please refer to FIG. 5. For instance, the SPI device enters operation 502 after power-on or reset (for example, power-on reset). In operation 502, the SPI device at a default-mode execution. Specifically, the SPI device decodes and executes the decoded SPI instruction in the default SPI mode (one of 1-1-1, 1-4-4 and 1-8-8).

Next, in operation 504, the SPI device checks if the received SPI instruction is a Switch-Mode instruction (e.g., switch to OPI mode), and, if it is not, reenters operation 502, to decode and execute the next SPI instruction in default mode.

Going back to operation 504, if the SPI device checks that the received instruction is a switch-mode instruction (e.g., checking to OPI instruction ), the SPI device enters operation 506, the SPI device is in the default mode in parallel with the operation mode indicated by the SPI instruction in current operation 504 (e.g., OPI mode or QPI mode) to decode the SPI instruction. However, the SPI device executes only the decoded SPI instructions, and stores the decoded SPI instructions by the default mode.

Next, in operation 508, the SPI device checks if the received SPI instruction is a switch-to-default-SPI-mode instruction; if so, the SPI device reenters operation 502, to decode further SPI instructions in the default mode.

Going back to operation 508, if the SPI device does not check the switch-to-default-SPI-mode instruction, the SPI device enters operation 510, the SPI device checks whether the mode-reset sequence is received. If yes, the SPI device enter operation 512 to execute the last instruction decoded by default mode (that is, the instruction stored after parallel decoding by default mode in operation 506), and return to operation 502. Therefore, the SPI device can reenter operation 502 after operation 512 to decode other instructions in the default mode without losing the instruction. Going back to operation 510, if the SPI device does not receive the Mode-reset sequence, the SPI device enters operation 514, where the SPI device checks whether the SPI host indicates to open the XIP mode.

In an embodiment, the SPI host may set I/O0=1 at the first clock cycle following the sending of the address to indicate that the XIP mode is turned on. If, in operation 514, the SPI host does not indicate that the XIP mode is turned on, the SPI device will reenter operation 506, to decode the next instruction in OPI mode.

Going back to operation 514, if the SPI host indicates that the XIP mode is turned on, the SPI device will enter operation 516, and the SPI device will decode and execute the received SPI instruction (only contains address and data, and to execute is to use the last sending opcode) in the current mode (QPI or OPI mode), and decode in the default mode and store SPI instruction decoded by default mode in parallel.

Next, in operation 518, the SPI device checks whether the Lost-Sync event is detected. For instance, the SPI device may be defined an address starting with FF or FE as an illegal address and interpret it as a Lost-Sync event. At the time, the SPI device may check if the MS byte of the received address is an FF or an FE. If the SPI device does not detect the Lost-Sync event, the SPI device reenters operation 615 and continues decoding in parallel.

Going back to operation 518, if the Lost-Sync event is checked by the SPI device, the SPI device enters operation 520, the SPI device executes the last default-SPI instruction that was decoded (i.e., the instruction that is decoded in the default mode and stored in parallel in operation 516), and go back to operation 502. Therefore, the SPI device may reenter operation 502 after operation 512 in default mode to decode and execute further SPI instructions in the default mode without losing the instruction.

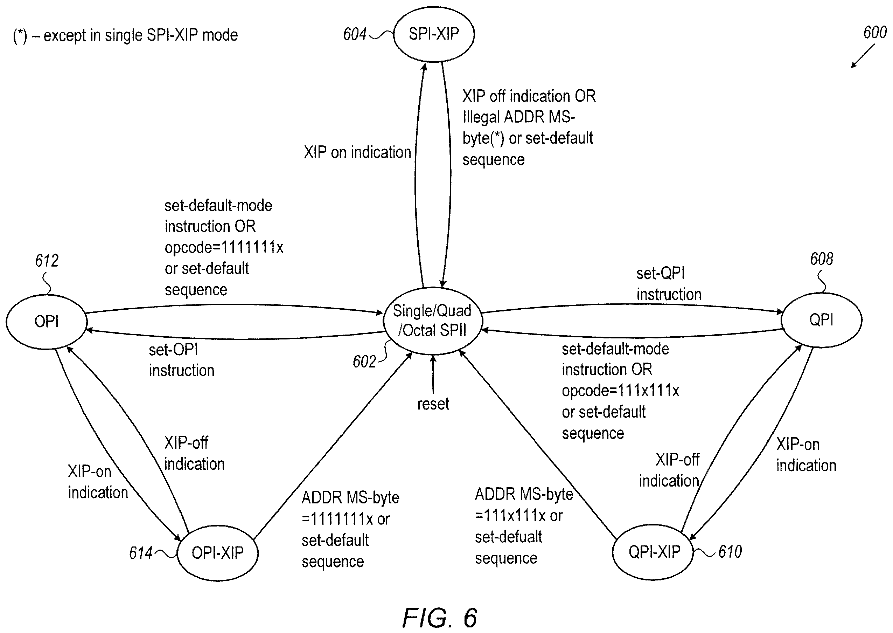

Fig. 6 is a state-diagram 600 that illustrates the states of an SPI device, in accordance with an embodiment of the present invention. Each state in Fig. 6 represents an SPI, a QPI or an OPI operating mode:
1. state 602, default mode, e.g., one of single (1-1-1), quad (1-4-4) or octal (1-8-8) SPI mode;
2. state 604 (SPI-XIP), turning on XIP mode in the default mode;
3. state 608, QPI mode (4-4-4);
4. state 610 (QPI-XIP), turning on XIP mode in the QPI mode;
5. state 612, OPI mode (8-8-8); and
6. state 614 (OPI-XIP), turning on XIP mode in the OPI mode.

We will first describe "normal" transitions between the states, and then describe transitions in case of Lost-Sync, according to embodiments.

Following a Reset signal, the SPI device is in the SPI state 602. Responsively to an XIP-On indication (e.g., a set I/O0 in the first clock following the address) the SPI device transits to the SPI-XIP state 604, and, responsively to an XIP-off indication (e.g., setting a I/O0 in the first clock loop following the address, receiving the illegal address or specific sequence), the SPI device reverts from SPI-XIP state 604 back to state 602.

If the SPI device, while in default-SPI state 602, receives a set-mode-QPI or a set-mode-OPI instruction, the SPI device will transit, respectively, to state 608 (QPI) or to state 610 (OPI); when in state 608 or state 612, the SPI device will return to the state 602 upon receipt of a set-mode-SPI instruction.

When in either state 608 or in state 612, the SPI device may receive an XIP-On indication, and transit to state 610 (QPI-XIP) or to state 614(QPI-XIP), respectively. When in either the state 610 or the state 614, the SPI device will, responsively to an XIP-off indication, revert, respectively, to state 608 or to state 612.

In embodiments, additional inter-state transitions may be provided, to allow recovery from a Lost-Sync event. If the SPI device is in SPI-XIP state and the SPI host is in SPI (non-XIP) state, the SPI device will receive an address with at least the three MS bits set (driven logic high by pull-up resistors 110) and will, responsively, reverts to state 602.

If the SPI device is in QPI state 608 while the SPI host is in SPI (not XIP) mode, the SPI device will receive an opcode with bits 5-6-7 and 3-2-1 at logic high level (one of opcodes FF, FE, EF, EE - all defined, according to embodiments, as illegal) and, responsively, reverts to state 602.

If the SPI device in the OPI state 612 while the SPI host is in SPI (not XIP) mode, the SPI device will receive an opcode with bits 1 through 7 at logic high level (one of opcodes FF, FE), and responsively revert to state 602.

If sync is lost while the SPI device is in the OPI-XIP state 614, the SPI device will get an address with MS byte equal FF, FE, EF or EE and responsively revert to default state 602. If sync is lost while the SPI device is in the SPI-XIP state 604, the SPI device will get an address starting with FF or FE (for OPI) or an address starting with FF, FE, EF or EE (for QPI), and responsively revert to the default SPI mode 602 (this method will not work to recover from lost sync in single SPI-XIP).

Additionally, when detecting the mode-reset sequence (as described above), the SPI device, from any state, will transit to the state 602.

The different sub-units of SPI host 101, SPI device 102, pull-up devices 110 and SPI device 300 may be implemented using suitable hardware, such as in one or more Application-Specific Integrated Circuits (ASICs) or Field-Programmable Gate Arrays (FPGAs), using software, using hardware, or using a combination of aforementioned hardware and software.

SPI host 101 and/or SPI device (Fig. 1) and/or SPI device 300 (Fig. 3) may comprise one or more general-purpose processors, which are programmed in software to carry out the functions described herein. The software may be downloaded to the processor in electronic form, over a network or from a host, for example, or it may, alternatively or additionally, be provided and/or stored on non-transitory tangible media, such as magnetic, optical, or electronic memory.

In summary, in an embodiment of the present invention, the SPI device is configured to detect whether the SPI host unilaterally switches to the SPI mode. In the embodiment, for example, a weak pull-up device (for example, a resistor coupled to positive supply) can be connected to the portion of data wires; when the SPI host changes to SPI mode, the SPI device will receive logic high level on unused wires (for example, I/O1 to I/O7).

In an embodiment, by not using the operation code starting with one or a plurality of disposed logic high bit, and it can be defined as a Lost-Sync event; as a result, if the SPI device in QPI mode or OPI mode receives an opcode that is disposed as MS byte starting with a logic high bit, it is considered to be detecting the loss of synchronization with the SPI host to recovery to default mode. In other embodiment, it can be defined that the address starting with one or more logic high is illegal; as a result, if the SPI device receives an address starting with one or more logic high when it expects to receive a legal address (e.g., when XIP mode is turned on), it is considered to be detecting the loss of synchronization with the SPI host to recovery to default mode. When the SPI device detects the loss of synchronization when the XIP mode is turned on, the SPI device will abort the current XIP operation in the case of not responding to the SPI host, thereby avoiding possible bus contention.

In an embodiment, in order to avoid losing the data of the first instruction of the SPI host sent after the SPI host changes its mode, the SPI device may comprise a parallel decode circuit in the current configured operation mode (such as QPI or OPI) Neutralize and decode SPI communication in parallel in default mode. When the SPI device detecting loses the synchronization event, the SPI device will execute the instruction decoded in the default mode.

In another embodiment, a unique mode-reset sequence can be defined, for example, all I/O wires of the SPI bus can be disposed to logic "1" in a longer cycle period (for example, 16 clock pulses). In this embodiment, this kind of sequence cannot be used as a proper operation transmit, as a result, the SPI device can interpret it as an instruction to reset the operation mode to default mode.

As a result, in the embodiment, over adding a pull-up device to the I/O wire, parallel decoding, and/or over defining a unique mode-reset sequence, the SPI device can detect and recover from a Lost-Sync event.

## Claims

1. A method for Serial Peripheral Interface (SPI) operating-mode synchronization between an SPI host (101) and an SPI device (102, 300) that communicate over an SPI bus, the method comprising:
predefining, in the SPI device (102, 300), one or more values on the SPI bus as indicative of an error caused by the SPI host (101) and the SPI device (102, 300) operating in different SPI modes; and
in response to receiving any of the predefined values in the SPI device (102, 300), initiating a re-synchronization process that causes the SPI device to operate in the same SPI operating mode,
wherein the one or more predefined values comprise one or more SPI instruction operating codes or SPI address operating codes in which a predefined group of bits is at a defined logic state,
wherein one or more wires of the SPI bus are connected to pull-up or pull-down devices that force the one or more wires to a defined logic state, and wherein the one or more values indicative of the error comprise the one or more values in which the one or more wires are at the defined logic state, wherein the pull-up or pull-down devices is pull-up or pull-down resistor.

2. The method according to claim 1, wherein the one or more values indicative of the error comprise a predefined sequence of values that is pre-coordinated between the SPI host (101) and the SPI device (102, 300).

3. The method according to claim 1, comprising sending one or more of the predefined values by the SPI host (101), so as to cause the SPI device (102, 300) to initiate the re-synchronization process.

4. The method according to claim 1, comprising, in the SPI device (102, 300), aborting a current operation without responding to the SPI host (101).

5. The method according to claim 1, wherein initiating the re-synchronization process comprises reverting, in the SPI device (102, 300), to a default SPI operating mode.

6. The method according to claim 5, wherein the default SPI operating mode is a single-wire, 24-bit address, non-Execute-In-Place (non-XIP) operating mode.

7. The method according to claim 1, comprising, in the SPI device (102, 300), decoding SPI instructions concurrently in a default operating mode and in a current operating mode, wherein initiating the re-synchronization process comprises reverting to the default operating mode upon receiving any of the predefined values.

8. An apparatus, comprising:
a Serial Peripheral Interface (SPI) host; and
an SPI device (102, 300), configured to:
communicate with the SPI host (101) over an SPI bus; and
in response to receiving, on the SPI bus, any of one or more values, which are predefined in the SPI device (102, 300) as indicative of an error caused by the SPI host (101) and the SPI device (102, 300) operating in different SPI modes, initiate a re-synchronization process that caused the SPI host and the SPI device to operate in the same SPI operating mode,
wherein the one or more predefined values comprise one or more SPI instruction operating codes or SPI address operating codes in which a predefined group of bits is at a defined logic state,
wherein one or more wires of the SPI bus are connected to pull-up or pull-down devices that force the one or more wires to a defined logic state, and wherein the one or more values indicative of the error comprise the one or more values in which the one or more wires are at the defined logic state, wherein the pull-up or pull-down devices is resistors.

9. The apparatus according to claim 8, wherein the one or more values indicative of the error comprise a predefined sequence of values that is pre-coordinated between the SPI host (101) and the SPI device (102, 300).

10. The apparatus according to claim 8, wherein the SPI host (101) is configured to send one or more of the predefined values, so as to cause the SPI device (102, 300) to initiate the re-synchronization process.

11. The apparatus according to claim 8, wherein the SPI device (102, 300) is configured to abort a current operation without responding to the SPI host (101).

12. The apparatus according to claim 8, wherein the SPI device (102, 300) is configured to initiate the re-synchronization process by reverting to a default operating mode.

13. The apparatus according to claim 12, wherein the default operating mode is a single-wire, 24-bit address, non-Execute-In-Place (non-XIP) operating mode.

14. The apparatus according to claim 8, the SPI device (102, 300) is configured to decode SPI instructions concurrently in a default operating mode and in a current operating mode, and to initiate the re-synchronization process by reverting to the default operating mode upon receiving any of the predefined values.

## Patentansprüche

1. Verfahren zur Betriebsmodussynchronisation einer seriellen Peripherieschnittstelle (SPI) zwischen einem SPI-Host (101) und einer SPI-Vorrichtung (102, 300), welche über einen SPI-Bus kommunizieren, wobei das Verfahren umfasst:
Vorab-Definieren eines oder mehrerer Werte auf dem SPI-Bus als einen Fehler anzeigend, der dadurch bewirkt wird, dass der SPI-Host (101) und die SPI-Vorrichtung (102, 300) in verschiedenen SPI-Modi arbeiten, durch die SPI-Vorrichtung (102, 300); und
in Reaktion auf ein Empfangen eines der vorab definierten Werte in der SPI-Vorrichtung (102, 300) Auslösen eines Neusynchronisationsprozesses, welcher bewirkt, dass die SPI-Vorrichtung in dem gleichen SPI-Betriebsmodus arbeitet,
wobei der eine oder die mehreren vorab definierten Werte einen oder mehrere SPI-Anweisungs-Betriebscodes oder SPI-Adress-Betriebscodes umfassen, bei welchen sich eine vorab definierte Gruppe von Bits in einem definierten Logikzustand befinden,
wobei ein oder mehrere Drähte des SPI-Busses mit Pull-Up- oder Pull-Down-Vorrichtungen verbunden sind, welche den einen oder die mehreren Drähte in einen definierten Logikzustand zwingen, und wobei der eine oder die mehreren vorab definierten Werte, die den Fehler anzeigen, den einen oder die mehreren Werte umfassen, bei welchen sich der eine oder die mehreren Drähte in dem definierten Logikzustand befinden, wobei es sich bei den Pull-Up- oder Pull-Down-Vorrichtungen um einen Pull-Up- oder Pull-Down-Widerstand handelt.

2. Verfahren nach Anspruch 1, wobei der eine oder die mehreren Werte, welche den Fehler anzeigen, eine vorab definierte Sequenz von Werten umfassen, welche zwischen dem SPI-Host (101) und der SPI-Vorrichtung (102, 300) vorab koordiniert ist.

3. Verfahren nach Anspruch 1, umfassend Senden eines oder mehrerer der vorab definierten Werte durch den SPI-Host (101), um zu bewirken, dass die SPI-Vorrichtung (102, 300) den Neusynchronisationsprozess auslöst.

4. Verfahren nach Anspruch 1, umfassend Abbrechen eines aktuellen Betriebs in der SPI-Vorrichtung (102, 300), ohne auf den SPI-Host (101) zu reagieren.

5. Verfahren nach Anspruch 1, wobei das Auslösen des Neusynchronisationsprozesses Zurückkehren zu einem Standard-SPI-Betriebsmodus in der SPI-Vorrichtung (102, 300) umfasst.

6. Verfahren nach Anspruch 5, wobei der Standard-SPI-Betriebsmodus ein Einzeldraht-Non-Execute-In-Place-Betriebsmodus (Einzeldraht-Non-XIP-Betriebsmodus) mit 24-Bit-Adressen ist.

7. Verfahren nach Anspruch 1, umfassend gleichzeitiges Decodieren von SPI-Anweisungen in einem Standard-Betriebsmodus und in einem aktuellen Betriebsmodus in der SPI-Vorrichtung (102, 300), wobei das Auslösen des Neusynchronisationsprozess Zurückkehren zu dem Standard-Betriebsmodus nach Empfangen eines der vorab definierten Werte umfasst.

8. Vorrichtung, umfassend:
einen Serial-Peripheral-Interface-Host (SPI-Host); und
eine SPI-Vorrichtung (102, 300), konfiguriert zum:
Kommunizieren mit dem SPI-Host (101) über einen SPI-Bus; und
in Reaktion darauf, dass auf dem SPI-Bus einer des einen oder der mehreren Werte empfangen wird, welche in der SPI-Vorrichtung (102, 300) vorab als einen Fehler anzeigend definiert sind, der dadurch bewirkt wird, dass der SPI-Host (101) und die SPI-Vorrichtung (102, 300) in verschiedenen SPI-Modi arbeiten, Auslösen eines Neusynchronisationsprozesses, welcher bewirkt, dass der SPI-Host und die SPI-Vorrichtung in dem gleichen SPI-Betriebsmodus arbeiten,
wobei der eine oder die mehreren vorab definierten Werte einen oder mehrere SPI-Anweisungs-Betriebscodes oder SPI-Adress-Betriebscodes umfassen, bei welchen sich eine vorab definierte Gruppe von Bits in einem definierten Logikzustand befinden,
wobei ein oder mehrere Drähte des SPI-Busses mit Pull-Up- oder Pull-Down-Vorrichtungen verbunden sind, welche den einen oder die mehreren Drähte in einen definierten Logikzustand zwingen, und wobei der eine oder die mehreren vorab definierten Werte, die den Fehler anzeigen, den einen oder die mehreren Werte umfassen, bei welchen sich der eine oder die mehreren Drähte in dem definierten Logikzustand befinden, wobei es sich bei den Pull-Up- oder Pull-Down-Vorrichtungen um einen Pull-Up- oder Pull-Down-Widerstand handelt.

9. Vorrichtung nach Anspruch 8, wobei der eine oder die mehreren Werte, welche den Fehler anzeigen, eine vorab definierte Sequenz von Werten umfassen, welche zwischen dem SPI-Host (101) und der SPI-Vorrichtung (102, 300) vorab koordiniert ist.

10. Vorrichtung nach Anspruch 8, wobei der SPI-Host (101) konfiguriert ist zum Senden eines oder mehrerer der vorab definierten Werte, um zu bewirken, dass die SPI-Vorrichtung (102, 300) den Neusynchronisationsprozess auslöst.

11. Vorrichtung nach Anspruch 8, wobei die SPI-Vorrichtung (102, 300) konfiguriert ist zum Abbrechen eines aktuellen Betriebs, ohne auf den SPI-Host (101) zu reagieren.

12. Vorrichtung nach Anspruch 8, wobei die SPI-Vorrichtung (102, 300) konfiguriert ist zum Auslösen des Neusynchronisationsprozesses durch Zurückkehren zu einem Standard-SPI-Betriebsmodus.

13. Vorrichtung nach Anspruch 12, wobei der Standard-SPI-Betriebsmodus ein Einzeldraht-Non-Execute-In-Place-Betriebsmodus (Einzeldraht-Non-XIP-Betriebsmodus) mit 24-Bit-Adressen ist.

14. Vorrichtung nach Anspruch 8, wobei die SPI-Vorrichtung (102, 300) konfiguriert ist zum gleichzeitigen Decodieren von SPI-Anweisungen in einem Standard-Betriebsmodus und in einem aktuellen Betriebsmodus und zum Auslösen des Neusynchronisationsprozess durch Zurückkehren zu dem Standard-Betriebsmodus nach Empfangen eines der vorab definierten Werte.

## Revendications

1. Procédé de synchronisation du mode de fonctionnement d'une interface périphérique série (SPI) entre un hôte SPI (101) et un périphérique SPI (102, 300) qui communiquent via un bus SPI, le procédé comprenant :
la prédéfinition, dans le périphérique SPI (102, 300), d'une ou plusieurs valeurs sur le bus SPI indiquant une erreur causée par le fonctionnement différent de l'hôte SPI (101) et du périphérique SPI (102, 300) ; et
en réponse à la réception d'une des valeurs prédéfinies dans le périphérique SPI (102, 300), le lancement d'un processus de resynchronisation qui amène le périphérique SPI à fonctionner dans le même mode de fonctionnement SPI,
dans lequel la ou les valeurs prédéfinies comprennent un ou plusieurs codes d'opération d'instruction SPI ou codes d'opération d'adresse SPI dans lesquels un groupe prédéfini de bits est à un état logique défini,
dans lequel un ou plusieurs fils du bus SPI sont connectés à des dispositifs de rappel vers le haut ou vers le bas qui forcent le ou les fils à un état logique défini et dans lequel la ou les valeurs indicatives de l'erreur comprennent la ou les valeurs dans lesquelles le ou les fils sont à l'état logique défini, dans lequel le dispositif de rappel vers le haut ou vers le bas est une résistance de rappel vers le haut ou vers le bas.

2. Procédé selon la revendication 1, dans lequel la ou les valeurs indicatives de l'erreur comprennent une séquence prédéfinie de valeurs pré-coordonnée entre l'hôte SPI (101) et le périphérique SPI (102, 300).

3. Procédé selon la revendication 1, comprenant l'envoi d'une ou plusieurs des valeurs prédéfinies par l'hôte SPI (101), afin d'amener le périphérique SPI (102, 300) à initier le processus de resynchronisation.

4. Procédé selon la revendication 1, comprenant, dans le périphérique SPI (102, 300), l'interruption d'une opération en cours sans réponse à l'hôte SPI (101).

5. Procédé selon la revendication 1, dans lequel le lancement du processus de resynchronisation comprend le retour, dans le périphérique SPI (102, 300), à un mode de fonctionnement SPI par défaut.

6. Procédé selon la revendication 5, dans lequel le mode de fonctionnement SPI par défaut est un mode de fonctionnement non-XIP (non-Execute-In-Pace) à adresse monofilaire 24 bits.

7. Procédé selon la revendication 1, comprenant, dans le périphérique SPI (102, 300), le décodage d'instructions SPI simultanément dans un mode de fonctionnement par défaut et dans un mode de fonctionnement en cours, dans lequel le lancement du processus de resynchronisation comprend le retour au mode de fonctionnement par défaut lors de la réception d'une des valeurs prédéfinies.

8. Appareil comprenant :
un hôte d'interface périphérique série (SPI) ; et
un périphérique SPI (102, 300) configuré pour :
communiquer avec l'hôte SPI (101) via un bus SPI ; et
en réponse à la réception, sur le bus SPI, de n'importe laquelle d'une ou plusieurs valeurs prédéfinies dans le périphérique SPI (102, 300) comme indiquant une erreur causée par l'hôte SPI (101) et le périphérique SPI (102, 300) fonctionnant dans des modes SPI différents, lancer un processus de resynchronisation qui amène l'hôte SPI et le périphérique SPI à fonctionner dans le même mode de fonctionnement SPI,
dans lequel la ou les valeurs prédéfinies comprennent un ou plusieurs codes d'opération d'instruction SPI ou codes d'opération d'adresse SPI dans lesquels un groupe prédéfini de bits est à un état logique défini,
dans lequel un ou plusieurs fils du bus SPI sont connectés à des dispositifs de rappel vers le haut ou vers le bas qui forcent le ou les fils à un état logique défini et dans lequel a ou les valeurs indicatives de l'erreur comprennent la ou les valeurs dans lesquelles le ou les fils sont à l'état logique défini, dans lequel le dispositif de rappel vers le haut ou vers le bas est une résistance.

9. Appareil selon la revendication 8, dans lequel la ou les valeurs indicatives de l'erreur comprennent une séquence prédéfinie de valeurs qui est pré-coordonnée entre l'hôte SPI (101) et le périphérique SPI (102, 300).

10. Appareil selon la revendication 8, dans lequel l'hôte SPI (101) est configuré pour envoyer une ou plusieurs des valeurs prédéfinies, de manière à amener le périphérique SPI (102, 300) à lancer le processus de resynchronisation.

11. Appareil selon la revendication 8, dans lequel le périphérique SPI (102, 300) est configuré pour interrompre une opération en cours sans répondre à l'hôte SPI (101).

12. Appareil selon la revendication 8, dans lequel le périphérique SPI (102, 300) est configuré pour initier le processus de resynchronisation en revenant à un mode de fonctionnement par défaut.

13. Appareil selon la revendication 12, dans lequel le mode de fonctionnement par défaut est un mode de fonctionnement non-Execute-In-P1ace (non-XIP) à adresse monofilaire 24 bits.

14. Appareil selon la revendication 8, dans lequel le périphérique SPI (102, 300) est configuré pour décoder les instructions SPI simultanément dans un mode de fonctionnement par défaut et dans un mode de fonctionnement en cours et pour lancer le processus de resynchronisation en revenant au mode de fonctionnement par défaut dès réception d'une des valeurs prédéfinies.
